Europäisches Patentamt

European Patent Office

Office européen des brevets

(19)

(11) Numéro de publication: **0 071 054**
**B1**

(12) **FASCICULE DE BREVET EUROPEEN**

(45) Date de publication du fascicule du brevet:
27.11.85

(21) Numéro de dépôt: **82106072.0**

(22) Date de dépôt: **07.07.82**

(51) Int. Cl.⁴: **A 23 L 1/48,** A 23 L 1/212,
A 23 C 19/09

(54) **Procédé de préparation d'une composition pour soufflés congelés ou surgelés.**

(30) Priorité: **29.07.81 FR 8114751**

(43) Date de publication de la demande:
**09.02.83 Bulletin 83/6**

(45) Mention de la délivrance du brevet:
**27.11.85 Bulletin 85/48**

(84) Etats contractants désignés:
**AT BE CH DE GB IT LI NL SE**

(56) Documents cités:
**EP - A - 0 007 054**
**DE - C - 806 754**
**FR - A - 900 368**
**FR - A - 991 419**
**FR - A - 2 346 987**
**FR - A - 2 464 033**

**FOOD TECHNOLOGY, vol.21, août 1967 S.L. CIMINO et al.: "The stability of souffles and meringues subjected to frozen storage", pages 97-100**

(73) Titulaire: **FRISCO-FINDUS AG, CH-9400 Rorschach (CH)**

(72) Inventeur: **Havette, Bernard, 11, rue Verte Fay St-Quentin, F-60510 Bresles (FR)**
Inventeur: **Hebert, Christian, Grande Rue St-Martin le Noeud, F-60001 Beauvais (FR)**

**Description**

La présente invention concerne un procédé de préparation d'une composition pour soufflés congelés ou surgelés.

On connaît la difficulté à préparer un soufflé qui soit réussi, c'est-à-dire qui monte correctement à la cuisson et ne s'affaisse que modérément au moment de le servir. De plus un soufflé est habituellement préparé sur place pour en assurer la fraîcheur et est servi et consommé immédiatement. Ceci est vrai aussi bien pour les soufflés salés, notamment au fromage que pour les soufflés d'entremets ou sucrés.

On a donc cherché à mettre à disposition des préparations pour soufflés congelées en emballage individuel qu'il suffit de mettre au four pour obtenir, après cuisson, un soufflé réussi à tout coup semblable au produit frais. Ainis des procédés de préparation de soufflés sucrés congelés ou surgelés sont décrits dans les brevets français 2082138 et 2346987. Ils prévoient l'emploi d'une quantité importante de blanc d'œuf battu en neige et meringué qui, comme dans la recette traditionnelle, doit être mélangé délicatement à une pâte à choux éventuellement additionnée de crème pâtissière. De tels procédés sont difficilement industrialisables à grande échelle du fait des précautions qu'il faut prendre lors de la préparation des blancs d'œuf foisonnés et de leur incorporation dans la masse de pâte à choux susceptible de maintenir leur texture aérée.

D'autres développements en rapport avec des préparations congelées ou surgelées pour omelettes soufflées, par exemple selon le brevet des Etats-Unis 3073704 ou pour «pancakes» par exemple selon le brevet des Etats-Unis 4022917, préconisent l'incorporation d'un agent levant tel que le bicarbonate de sodium éventuellement encapsulé dans de la graisse et susceptible de libérer du gaz carbonique au réchauffement par réaction avec un acide présent dans la masse de pâte. L'adjonction de poudre à lever n'est pas souhaitée dans un soufflé qu'on veut aussi proche que possible d'un produit frais.

Enfin d'autres procédés connus proposant l'utilisation d'anhydride carbonique mélangée dans la masse pour faire lever des produits pâteux à cuire, par exemple selon FR-A-991419 ou foisonnée dans des crèmes fouettées, le foisonnement ayant lieu sous vide dans ce dernier cas de manière à réaliser l'expansion, par exemple selon DE-C-806754.

Nous avons trouvé qu'on peut préparer industriellement par un procédé simple des soufflés congelés ou surgelés salés ou sucrés ayant toutes les caractéristiques du produit frais, c'est-à-dire sans incorporation de poudre à lever et susceptibles de se développer sans affaissement lors de leur cuisson ultérieure.

Le procédé selon l'invention dans lequel on prépare une masse de base comprenant:
— une panade cuite à base de matière grasse, de farine, d'eau et de crème,
— une charge constituée de légumes, fromage, poisson ou fruits,
— des jaunes d'œuf et
— des protéines texturantes,
est caractérisé par le fait qu'on mélange les différents ingrédients, sans opérer de foisonnement des protéines et qu'on incorpore à la masse de base du gaz carbonique par dissolution.

Dans la suite de l'exposé, on entendra par «protéines texturantes» des protéines capables de participer par cuisson à la formation d'un réseau qui se rigidifie en refroisissant, permettant entre autre de maintenir la texture légère et aérée du produit pendant un certain temps après la sortie du four.

Pour mettre en œuvre le procédé de l'invention, dans une première variante de préparation d'un produit salé:

I. On prépare une panade par cuisson pendant 3 à 10 min à 80–100°C de farine dans de la matière grasse à raison de 0,6 à 1 fois le poids de farine. Comme matière grasse on peut utiliser du beurre, une margarine ou toute autre graisse végétale. On y ajoute des épices, par exemple poivre, muscade, etc., de l'eau et de la crème laitière pour un total ajouté compris de préférence entre 1 à 2 fois le poids de farine.

II. On présentera ci-après un soufflé au fromage comme exemple d'un produit salé et dont le fromage constituera la base d'aromatisation. Il est clair qu'on peut remplacer la base fromage par une charge de légumes, par exemple des épinards, ou des miettes de poisson. Pour la préparer on mélange de l'eau chaude, du babeurre doux, c'est-à-dire provenant de la fabrication de beurre non acide ou en variante un mélange de lait écrémé et de lécithines naturelles, et du fromage à pâte cuite tel que par exemple de l'emmenthal, du parmesan ou du fromage fondu, auquel cas, une addition de sel de calcium, par exemple de chlorure de calcium est nécessaire pour contrer l'influence des sels de fonte sur les propriétés fonctionnelles des protéines texturantes. Pour obtenir une conservation prolongée on préfère procéder à la thermisation du mélange par exemple à température de 80 à 100°C et terminer par un broyage de la dispersion de manière à obtenir une masse lisse.

III. On prépare ensuite une base de protéines constituée de blancs d'œuf en poudre et/ou de protéines lactiques dans un rapport pondéral protéines/blanc d'œuf compris entre 0,3 et 3, qu'on réhydrate par addition d'une quantité appropriée d'eau. Comme protéines lactiques on utilise de préférence des protéines de lactosérum et/ou de lait écrémé ayant subi un traitement d'ultrafiltration, à faible teneur en lactose, correspondant à une concentration en protéines d'au moins 50% en poids.

On mélange les masses de bases I, II et III en y ajoutant des jaunes d'œuf, par exemple frais ou reconstitués par décongélation ou réhydratation dans un mélangeur à vitesse lente de façon à éviter le foisonnement et l'incorporation d'air dans des proportions pondérales correspondant à:

– jaune d'œuf: 3 à 12%
– base panade: 10 à 50%
– base d'aromatisation: 25 à 55% et
– base protéines: 22 à 50%

On peut en variante incorporer en une seule fois à froid les bases II et III.

Si l'on désire en variante obtenir un soufflé d'entremets, on incorpore du sucre dans les bases II et/ou III pour l'obtention de la qualité organoleptique souhaitée. L'aromatisation peut se faire par incorporation d'une charge de fruits en morceaux ou en purée ou d'un jus ou parfum obtenu par concentration d'un jus de fruits naturel. Il peut également s'agir d'une essence sucrée ou non sucrée, ou d'une liqueur alcoolique dans les bases II ou III.

L'opération suivante est, qu'il s'agisse d'un produit salé ou sucré, la dissolution de gaz carbonique dans le mélange soit à température inférieure à 30°C ou en variante préférée sous forme de carboglace à raison de 0,5 à 2% en poids en mélangeur statique ou planétaire.

On conditionne ensuite la préparation pour soufflé en emballages individuels en aluminium. L'emballage peut être de toute dimension et de toute forme convenable selon l'épaisseur du produit et avoir une dépouille adéquate pour le réchauffage. On utilisera par exemple des barquettes rondes de 125 ml de volume. On surgèle les emballages ainsi remplis dans une enceinte ventilée ou en surgélateur à plaques à environ −35°C.

Les exemples suivants, dans lesquels les quantités et pourcentages sont en valeur pondérale sauf indication contraire, illustrent l'invention.

Exemple 1
Soufflé au fromage (emmenthal)

| | | | |
|---|---|---|---|
| Margarine | 7 | | |
| Farine de blé | 11 | | |
| Crème | 4 | base panade | 31,3% |
| Epices | 0,5 | | |
| Eau | 13 | | |
| Emmenthal râpé | 17 | | |
| Babeurre doux | 15 | base fromage | 37,0% |
| Eau | 10 | | |
| Jaune d'œuf | 10 | | 8,8% |
| Protéines lactiques | 4 | | |
| Blanc d'œuf en poudre | 2 | base protéines | 22,9% |
| Eau | 20 | | |
| | 113,6 | | 100% |

Le procédé de préparation est tel que mentionné ci-dessus aux pages 3 et 4, et l'on opère la dissolution de gaz carbonique par adjonction de 2% de glace carbonique ou de neige carbonique dans un mélangeur planétaire à la température de 25°C en agitation lente pour éviter le foisonnement par de l'air, et ce jusqu'à complète dissolution. On effectue le conditionnement et la surgélation comme indiqué à la page 4.

Exemple 2
Soufflé sucré (poire)

| | | | |
|---|---|---|---|
| Margarine | 4 | | |
| Farine de blé | 6 | base panade | 16,8% |
| Crème | 2 | | |
| Eau | 4,5 | | |
| Jaune d'œuf | 10 | | 10,2% |
| Purée de poire | 40 | base | |
| Sucre | 10 | aromatique | 51,0% |
| Protéines lactiques | 3 | | |
| Blanc d'œuf | 3,5 | base protéines | 22,0% |
| Eau | 15 | | |
| | 98 | | 100% |

La panade est préparé comme indiqué à la page 3 ci-dessus. On y ajoute le jaune d'œuf puis le mélange de la base aromatique et des protéines. On réalise la dissolution du gaz carbonique par mise en contact et barbotage du gaz carbonique en continu avec la masse préparée ci-dessus, dans un tube, accessoirement muni intérieurement de chicanes et éventuellement refroidi par une circulation d'un fluide réfrigérant dans une double enveloppe concentrique. La dissolution se fait dans ces conditions à une température de l'ordre de 20°C à une pression de $1,5 \cdot 10^5$ Pascal à raison de environ 150 litres de gaz pour 100 kg de masse.

On conditionne et on surgèle les produits comme indiqué à la page 4.

**Revendications**

1. Procédé de préparation d'une composition pour soufflés congelés ou surgelés, dans lequel on prépare une masse de base comprenant:
– une panade cuite à base de matière grasse, de farine, d'eau et de crème,
– une charge constituée de légumes, fromage, poisson ou fruits,
– des jaunes d'œuf et
– des protéines texturantes,
caractérisé par le fait qu'on mélange les différents ingrédients, sans opérer de foisonnement des protéines et qu'on incorpore à la masse de base du gaz carbonique par dissolution.

2. Procédé selon la revendication 1, caractérisé par le fait que la charge est une base d'aromatisation comprenant un mélange de babeurre doux, de fromage à pâte cuite et d'eau traité thermiquement à 80–100°C et broyé.

3. Procédé selon la revendication 1, caractérisé par le fait que les protéines texturantes sont constituées:
– de protéines de lactosérum et/ou de lait écrémé ultrafiltré jusqu'à une concentration pondérale correspondant à au moins 50% en protéines et
– de blanc d'œuf, le rapport pondéral protéines lactiques/blanc d'œuf étant compris entre 0,3 et 3.

4. Procédé selon la revendication 1, caractérisé par le fait qu'on mélange sans foisonnement la panade, la charge ou base l'aromatisation, les protéines et les jaunes d'œuf dans des proportions pondérales correspondant à:

3 à 12% de jaunes d'œuf,
10 à 50% de panade,
25 à 55% de base d'aromatisation et de
22 à 50% de protéines.

5. Procédé selon l'une des revendications 1 à 4, caractérisé par le fait qu'on dissout du gaz carbonique sous forme de neige ou de glace carbonique dans le mélange à température inférieure à 30°C dans un mélangeur planétaire avec agitation lente.

6. Procédé selon l'une des revendications 1 à 4, caractérisé par le fait qu'on dissout du gaz carbonique dans le mélange par mise en contact et barbotage à température inférieure à 30°C dans un mélangeur statique.

7. Procédé selon la revendication 5 ou 6, caractérisé par le fait qu'on conditionne la composition pour soufflés dans des emballages individuels et qu'on surgèle les emballages ainsi remplis.

8. Soufflés congelés ou surgelés obtenus par la mise en œuvre du procédé selon la revendication 7.


## Patentansprüche

1. Verfahren zur Herstellung einer Zubereitung für gefrorene oder tiefgefrorene Soufflés, wobei eine Grundmasse bereitet wird, die:
– eine wärmebehandelte Panade auf Basis von Fettmaterial, Mehl, Wasser und Obers,
– eine Fülle, bestehend aus Gemüse, Käse, Fisch oder Obst,
– Eigelb und
– texturierende Proteine enthält,
dadurch gekennzeichnet, dass man die verschiedenen Bestandteile, ohne ein Aufschlagen der Proteine zu bewirken, miteinander vermischt und in die Grundmasse Kohlendioxid durch Auflösung einverleibt.

2. Verfahren nach Anspruch 1, dadurch gekennzeichnet, dass die Fülle eine Aromatisierungsgrundlage ist, die ein Gemisch aus süsser Buttermilch, Käse aus erwärmtem Käseteig und Wasser enthält, welches Gemisch bei 80 bis 100°C wärmebehandelt und gemahlen worden ist.

3. Verfahren nach Anspruch 1, dadurch gekennzeichnet, dass die texturierenden Proteine aus:
– Proteinen von Lactoserum und/oder entrahmter Milch, die bis auf eine Gewichtskonzentration entsprechend wenigstens 50% an Proteinen ultrafiltriert worden ist, und
– Eiweiss bestehen, wobei das Gewichtsverhältnis von Milchproteinen zu Eiweiss zwischen 0,3 und 3 liegt.

4. Verfahren nach Anspruch 1, dadurch gekennzeichnet, dass man ohne Aufschlagen die Panade, die Fülle oder Aromatisierungsgrundlage, die Proteine und das Eigelb in Gewichtsverhältnissen entsprechend:
3 bis 12% Eigelb,
10 bis 50% Panade,
25 bis 55% Aromatisierungsgrundlage und
22 bis 50% Proteine
vermischt.

5. Verfahren nach einem der Ansprüche 1 bis 4, dadurch gekennzeichnet, dass man das Kohlensäuregas in Form von Schnee oder Kohlensäureeis in dem Gemisch bei einer Temperatur unter 30°C in einem Planetenmischer bei langsamem Rühren auflöst.

6. Verfahren nach einem der Ansprüche 1 bis 4, dadurch gekennzeichnet, dass man Kohlensäuregas durch Inkontaktbringen und Durchperlenlassen bei einer Temperatur unter 30°C in einem statischen Mischer in dem Gemisch auflöst.

7. Verfahren nach Anspruch 5 oder 6, dadurch gekennzeichnet, dass man die Zubereitung für Soufflés in getrennten Verpackungen konditioniert und die solcherart gefüllten Verpackungen tiefgefriert.

8. Gefrorene oder tiefgefrorene Soufflés, erhalten durch Anwendung des Verfahrens nach Anspruch 7.


## Claims

1. A process for the preparation of a composition for frozen or deep-frozen soufflés, in which a base mass comprising the following is prepared:
– a baked panada based on fat, flour, water and cream,
– a charge composed of vegetables, cheese, fish or fruit,
– egg yolks, and
– texturizing proteins,
characterised in that the different ingredients are mixed, without expansion of the proteins, and carbon dioxide gas is incorporated in the base mass.

2. A process according to claim 1, characterised in that the charge is a flavouring base comprising a mixture of sweet buttermilk, cooked curd cheese and water, which is heated at 80 to 100°C, and crushed.

3. A process according to claim 1, characterised in that the texturizing proteins are composed of the following:
– whey and/or skimmed milk proteins, subjected to ultrafiltration to achieve a weight concentration corresponding to at least 50% of proteins, and
– egg white, the weight ratio of lactic proteins to egg white being from 0.3 to 3.

4. A process according to claim 1, characterised in that the panada, the charge or aromatization base, the proteins and the egg yolks are mixed, without expansion, in weight proportions corresponding to the following:
from 3 to 12% of egg yolk,
from 10 to 50% of panada,
from 25 to 55% of flavouring base, and
from 22 to 50% of proteins.

5. A process according to anyone of claims 1 to 4, characterised in that carbon dioxide snow or ice is dissolved in the mixture at a temperature below 30°C into a planetary mixer with slow agitation.

6. A process according to anyone of claims 1 to 4, characterised in that carbon dioxide gas is dissolved in the mixture by bringing it into contact with the mixture and bubbling at a temperature below 30°C into a static mixer.

7. A process according to claim 5 or 6, characterised in that the composition for soufflés is packed in individual packages and the filled packages are frozen.

8. Frozen soufflés obtained by carrying out the process according to claim 7.